# EUROPEAN PATENT SPECIFICATION

(11) **EP 1 248 413 B1**
(45) Date of publication and mention of the grant of the patent: **07.09.2005**
(21) Application number: 02251679.3
(22) Date of filing: 08.03.2002
(51) Int. Cl.: H04L 12/28

(54) **A method, system, and apparatus for transmitting information to mobile terminals**
Verfahren, System und Vorrichtung zur Informationsübertragung an Mobilfunkendgeräte
Procédé, système et dispositif pour la transmission d'informations vers des terminaux mobiles

(30) Priority: 09.03.2001 JP 2001067637
(43) Date of publication of application: 09.10.2002
(73) Proprietor: NTT DoCoMo, Inc., Tokyo 100-6150 (JP)
(72) Inventor: Ikeda, Takehiro, Gose-shi, Nara 639-2312 (JP); Okajima, Ichiro c/o Int.Prop.Dept., NTT DoCoMo Inc, Chiyoda-ku Tokyo 100-6150 (JP); Shinozaki,Takuya c/o Int.Prop.Dept.,NTT DoCoMo Inc, Chiyoda-ku Tokyo 100-6150 (JP)
(74) Representative: Rees, Alexander Ellison

(56) References cited:
- EP-A- 0 903 906
- EP-A- 0 986 210
- US-A- 5 636 220
- US-A- 6 049 533
- US-A- 6 061 563

## Description

### BACKGROUND OF THE INVENTION

### 1. Field of the Invention

The present invention relates to a method for providing information in a mobile communication system including a router connected to a predetermined network, and a plurality of communication apparatuses which can communicate with mobile terminals and are connected to the router, wherein information on the predetermined network is provided to the mobile terminals. The present invention also relates to the mobile communication system and the communication apparatuses, wherein both the system and the apparatuses employ the method for providing information.

### 2. Description of the Related Art

Information service which provides, for example, information on the Internet to the mobile terminals has become common recently. In such information services, the information on the Internet is transmitted to the mobile terminal via a router connected to the Internet and also via any one of the plurality of communication apparatuses (access points) connected to the router.

When an access point receives a location registration request from a mobile terminal located in a service area provided by the access point, the access point transfers information relating to the mobile terminal (mobile terminal information) to a router. The router updates a routing table held and used for managing communication paths to the mobile terminals, using the mobile terminal information from the access point. Then, when the destination of the information on the Internet is a mobile terminal, the router transfers it only to the access point providing the service area where the destination mobile terminal is located, on the basis of its routing table.

However, according to the conventional method for providing information described above, since there is a time lag between when the mobile terminal transmits the location registration request to the access point providing the service area where the mobile terminal is located and when the router updates its routing table, errors may occur in the communication paths via which the information on the Internet is transferred.

It is specifically considered that, before the router updates its routing table, a mobile terminal moves from one service area provided by one access point (a first access point) to which the mobile terminal transmits the location registration request, into another service area provided by another access point (a second access point). In this case, because the router transfers the information on the Internet to the first access point on the basis of its routing table before being updated, the mobile terminal cannot receive that information.

One known method of providing information in a mobile communication system is disclosed in EP-A-0903906. This discloses a method of providing information in a mobile communication system comprising a router connected to a network and a plurality of communication apparatuses which can communicate with mobile terminals and are connected to the router. The router obtains information from the network and transfers this information to one communication apparatus which serves the service area in which the destination mobile terminal is currently located. Said communication apparatus then transmits the received information to its service area.

Another known method for providing information in a mobile communication system is disclosed in US-A-6049533. This discloses a method of providing information in a mobile communication system comprising a plurality of communication apparatuses interconnected to form local area networks. Information is sent to a single mobile terminal having a service area in which the mobile terminal is located by sending information through the network of communication apparatuses. Each of the communication apparatuses maintains a table indicating the current location of the destination mobile station and compares this to the destination address of each information packet it receives. If the destination communication apparatus of the data packet is not the same as the current location of the mobile terminal the communication apparatus updates the communication terminal destination address of the data packet. The destination communication apparatus then transmits the information to its service area.

Another known method for providing information in a mobile communication system is disclosed in EP0986210A2. This discloses a method of providing information in a mobile communication system comprising a plurality of data storage equipments each serving a plurality of end points. Data is transmitted by a wireless broadcast transmitter. The data storage equipment receives and stores at least a portion of the data for use by one of the plurality of end points served by the storage equipment and provides this portion of the data to the desired end point.

### SUMMARY OF THE INVENTION

The present invention is directed toward solving the above problem, and thus its object is to provide the method for providing information, the mobile communication system, and the communication apparatuses, wherein reliability of providing information to the mobile terminals is improved.

The above object is achieved by the method for providing information in a mobile communication system comprising a router connected to a predetermined network, and a plurality of communication apparatuses which can communicate with mobile terminals and are connected to the router, in order to provide the information on the predetermined network to the mobile terminals, wherein: the router obtains the information from the predetermined network, and transfers this obtained information from the predetermined network to all of the communication apparatuses connected to the router; and each of the communication apparatuses receives the information from the predetermined network from the router, transmits this received information on the predetermined network to a service area of its own provided by the communication apparatus;
each of the communication apparatuses registers information relating to the mobile terminal originating the request into its located terminal table of its own held and used for managing the mobile terminals located in the service area of its own provided by the communication apparatus; each of the communication apparatuses determines whether information relating to the destination mobile terminal of the received information from the predetermined network is included in the located terminal table of its own; when the communication apparatus determines that the information relating to the destination mobile terminal is included in the located terminal table of its own, each of the communication apparatuses transmits the received information on the predetermined network to the destination mobile terminal; and when the communication apparatus determines that the information relating to the destination mobile terminal is not included in the located terminal table of its own, each of the communication apparatus does not transmit the received information on the predetermined network to the destination mobile terminal.

In the method for providing information, the router transfers the information on the predetermined network to all of the communication apparatuses, and each of the communication apparatuses transmits that information to a service area of its own. A mobile terminal located in a service area provided by any of the communication apparatuses can receive that information, thereby the reliability of providing information to the mobile terminals in improved.

In this method for providing information the reliability of providing the information to the mobile terminals is improved. Further, only when the communication apparatus determines that the destination of the information on the predetermined network can be transmitted is a mobile terminal located in a service area of its own, the communication apparatus transmits that information to that mobile terminal, thereby radio channels between the communication apparatus and the mobile terminal can be used efficiently.

From a similar point of view, in the method for providing information, each of the communication apparatuses sets up a delete time for the information relating to the mobile terminal registered in the located terminal table of its own; each of the communication apparatuses updates the delete time each time the location registration request is received from the same mobile terminal after the information relating to that mobile terminal is registered in the located terminal table of its own; and each of the communication apparatuses deletes the information relating to the mobile terminal corresponding to the delete time from the located terminal table of its own when current time reaches the delete time.

Further from the similar point of view, in the method for providing information, when each of the communication apparatuses receives a request for deleting the information relating to the mobile terminal that has moved out from the service area of its own provided by the communication apparatus, each of the communication apparatuses deletes the information relating to the mobile terminal from the located terminal table of its own in response to the request.

The present invention includes the mobile communication system and the communication apparatus each suitable for the above methods for providing information, according to claims 4 and 7, below.

### BRIEF DESCRIPTION OF THE DRAWINGS

Other objects, features and advantages of the present invention will become more apparent from the following detailed description when read in conjunction with the accompanying drawings, in which:
Fig. 1 shows an example of the configuration of the mobile communication system according to a first embodiment of the present invention;
Fig. 2 shows an example of the configuration of a network connecting the access points to the router;
Fig.3 shows an example of the configuration of the mobile communication system according to a second embodiment of the present invention;
Fig.4 shows an example of the configuration of the mobile communication system according to a third embodiment of the present invention;
Fig.5 shows an example of a located terminal table;
Fig.6 shows an example of the configuration of the mobile communication system according to a fourth embodiment of the present invention.

### DETAILED DESCRIPTION OF THE PREFERRED EMBODIMENTS

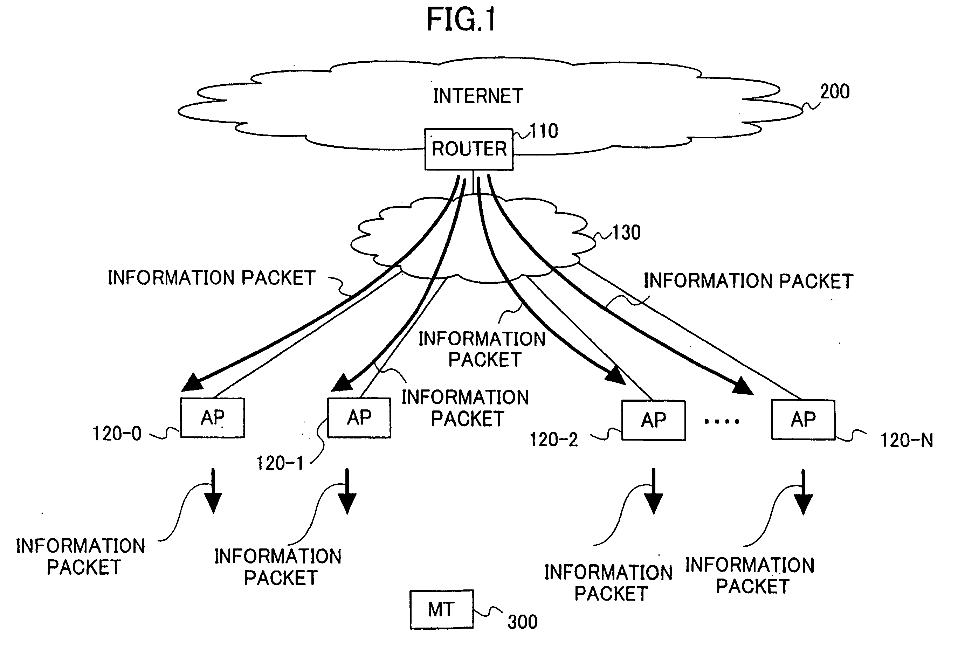

The present invention is described below with reference to the drawings. Fig.1 shows an example of the configuration of the mobile communication system according to the first embodiment of the present invention.

The mobile communication system shown in Fig.1 includes a router 110, access points (AP) 120-0 through 120-N which function as a plurality of communication apparatuses and are connected to the router 110, and a transmission network 130 connecting the router 110 and the access points 120-0 through 120-N. This mobile communication system provides the information on the Internet 200 via the router 110, the transmission network 130 and the access points 120-0 through 120-N to a mobile terminal (MT) 300 located in a service area provided by any one of the access points 120-0 through 120-N.

The router 110 connects the mobile communication system to the Internet 200. This router 110 obtains the information from the Internet 200 (hereinafter referred to as "information packets") either in response to a request from the mobile terminal 300 or autonomously. The router 110 transfers these obtained information packets via the transmission network 130 to all of the access points 120-0 through 120-N.

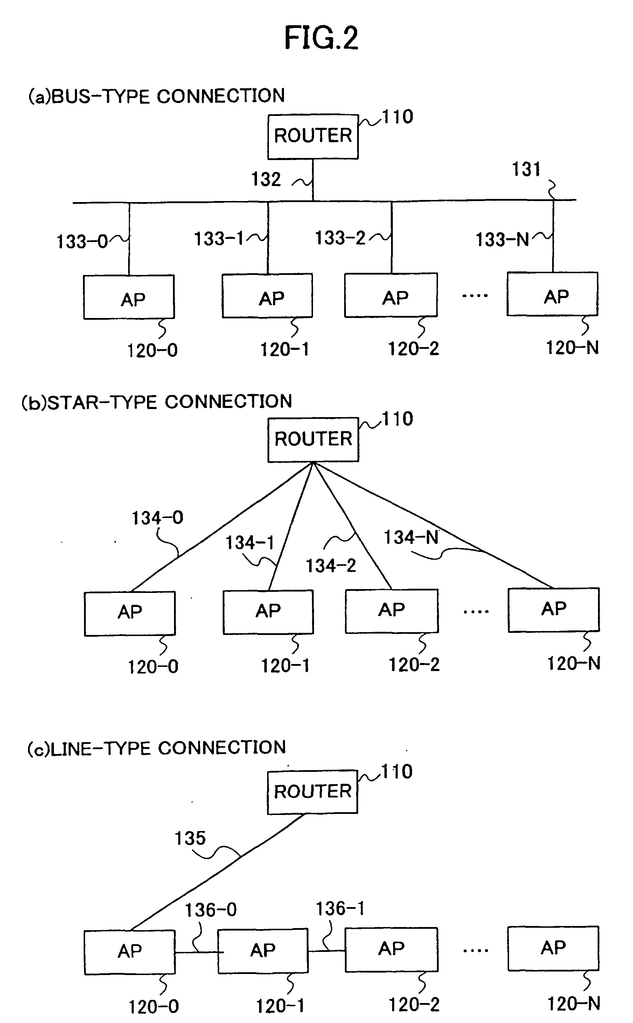

The transmission network 130 may have various configurations. Fig.2 shows an example of the configuration of the transmission network 130 connecting the access points 120-0 through 120-N to the router 110.

Fig.2(a) shows a bus-type connection wherein a communication line 132 connected to the router 110 and communication lines 133-0 through 133-N connected to the access points 133-0 through 133-N respectively are connected to a bus 131. Also Fig.2(b) shows a star-type connection wherein the access points 120-0 through 120-N are connected by respective communication lines 134-0 through 134-N to the router 110. Further Fig.2(c) shows a line-type connection wherein the router 110 and the access point 120-0 are connected by a communication line 136 and the access points 120-0 through 120-N are connected by communication lines 136-0 through 136-N-1.

Each of the access points 120-0 through 120-N receives the information packets that are transferred from the router 110 via the transmission network 130, and transmits those packets to a service area of its own.

The mobile terminal 300 located in a service area provided by any one of the access points 120-0 through 120-N receives those information packets from the access point. For example, when the mobile terminal 300 is located in the service area provided by the access point 120-1, the mobile terminal 300 receives the information packets transmitted by the access point 120-1.

Thus, in the mobile communication system of this embodiment, the router 110 transfers the information packets obtained from the Internet 200 to all of the access points 120-0 through 120-N, and each of the access points 120-0 through 120-N transmits those information packets to a service area of its own. Therefore, the mobile terminal 300 located in the service area provided by any one of the access points 120-0 through 120-N can receive the information packets, thereby the reliability of providing information to the mobile terminals is improved.

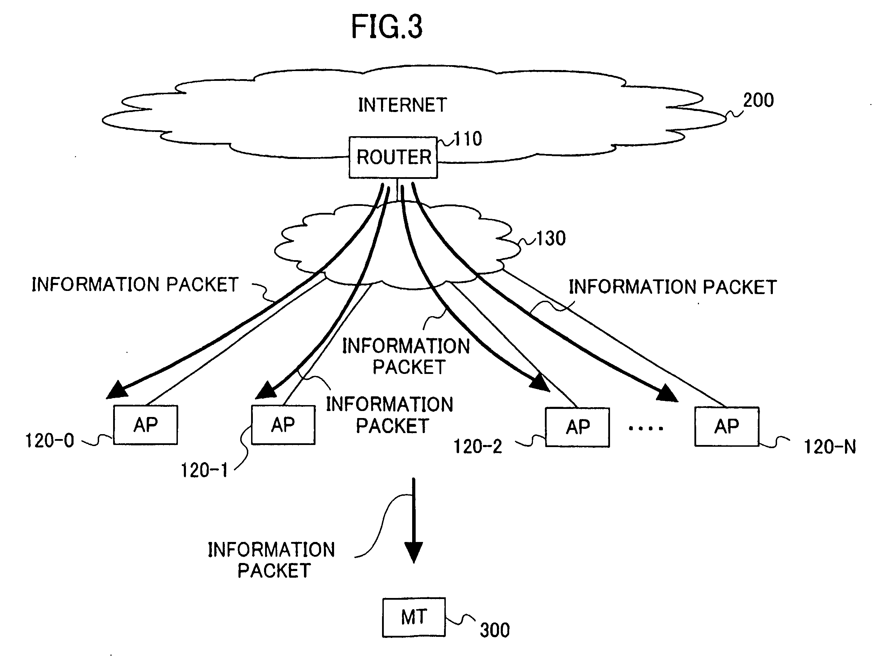

Fig.3 shows an example of the configuration of the mobile communication system according to the second embodiment of the present invention.

The mobile communication system shown in Fig.3 includes, as with the mobile communication system of the first embodiment shown in Fig.1, the router 110, the plurality of access points 120-0 through 120-N, and the transmission network 130 connecting the router 110 and the access points 120-0 through 120-N.

The router 110 obtains the information packets from the Internet 200, and transfers these information packets via the transmission network 130 to all of the access points 120-0 through 120-N.

Each of the access points 120-0 through 120-N receives a location registration request from each of the mobile terminals located in its own service area. This location registration request includes a terminal identification to identify the mobile terminal originating the request, such as a telephone number or an IP address allocated to the mobile terminal. Each of the access points 120-0 through 120-N registers the terminal identification included in the received location registration request into the located terminal table of its own held and used for managing mobile terminals located in a service area of its own.

Also, each of the access points 120-0 through 120-N receives the information packets from the router 110 via the transmission network 130. Each of these information packets include the terminal identification that represents the destination mobile terminal of that information packet. When each of the access points 120-0 through 120-N receives the information packets, it determines whether the terminal identification in those received information packets is included in the located terminal table of its own.

In the case that the terminal identification in the received information packets is included in the located terminal table of its own, each of the access points 120-0 through 120-N considers that the destination mobile terminal of those information packets is located in a service area of its own, and transmits those information packets to that service area. While, in the case that the terminal identification in the received information packets is not included in the located terminal table of its own, each of the access points 120-0 through 120-N considers that the destination mobile terminal of those information packets is not located in its own service area, and discards the received information packets without transmitting.

It is considered as an example that the information packets are transmitted to the mobile terminal 300 located in the service area provided by the access point 120-1. In this case, the access point 120-1 registers the terminal identification included in the location registration request from the mobile terminal 300 into the located terminal table of its own. Then, upon receiving the information packets, the access point 120-1 determines whether the terminal identification in the received information packets (that is the terminal identification of the mobile terminal 300) is included in its located terminal table. It is here assumed that the access point 120-1 determines that the terminal identification of the mobile terminal 300 is included in the located terminal table. The access point 120-1 then transmits those information packets to the mobile terminal 300. The mobile terminal 300 located in the service area provided by the access point 120-1 receives those information packets from the access point 120-1.

On the other hand, each of the other access points 120-0 and 120-2 through 120-N determines whether the terminal identification in the received information packets (that is the terminal identification of the mobile terminal 300) is included in its own located terminal table. Since the access points 120-0 and 120-2 through 120-N determine that the terminal identification of the mobile terminal 300 is not included in their respective located terminal tables, those access points discard the received information packets without transmitting.

Thus, in the mobile communication system of this embodiment, the router 110 transfers the obtained information from the Internet 200 to all of the access points 120-0 through 120-N, and each of the access points 120-0 through 120-N transmits this information from the Internet 200 to the destination mobile terminal in the case that the terminal identification of the destination mobile terminal in the received information from the Internet 200 is included in the located terminal table of its own, i.e. the destination mobile terminal of that information from the Internet 200 is located in a service area of its own. Therefore, as with the first embodiment, the mobile terminal 300 located in the service area provided by any one of the access points 120-0 through 120-N can receive the information packets, thereby the reliability of providing information to the mobile terminals is improved. Also, since each of the access points 120-0 through 120-N transmits the information on the Internet 200 to the destination mobile terminal only when the terminal identification of the destination mobile terminal in the received information on the Internet 200 is included in the located terminal table of its own, the radio channels between the access points and the mobile terminals can be used efficiently.

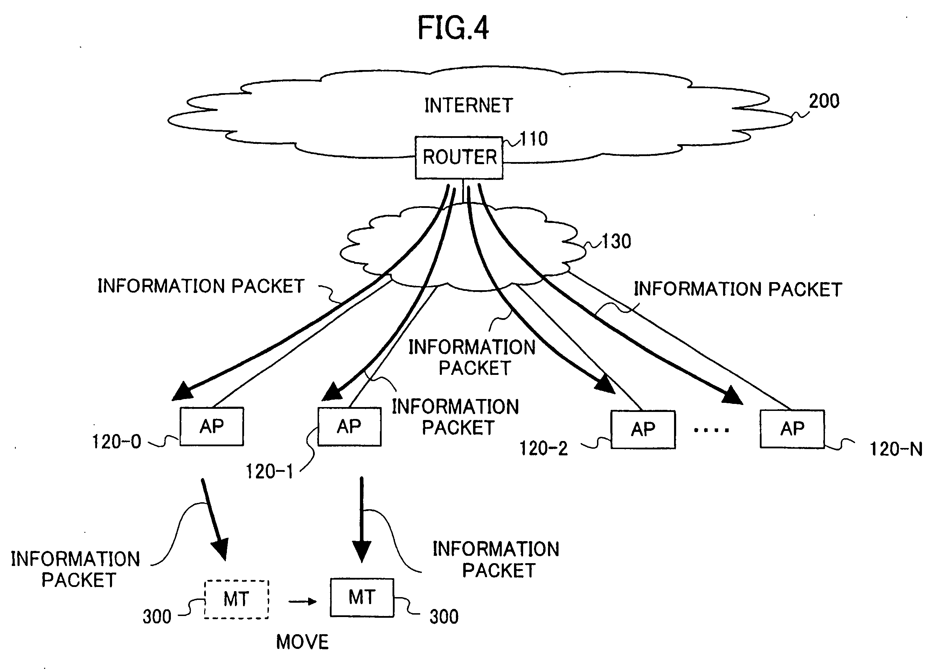

Fig.4 shows an example of the configuration of the mobile communication system according to the third embodiment of the present invention.

The mobile communication system shown in Fig.4 includes, as with the mobile communication system according to the first embodiment shown in Fig.1, the router 110, the plurality of access points 120-0 through 120-N, and the transmission network 130 connecting the router 110 and the access points 120-0 through 120-N.

The router 110 obtains the information packets from the Internet 200, and transfers those information packets via the transmission network 130 to all of the access points 120-0 through 120-N.

Each of the access points 120-0 through 120-N receives the location registration requests from the mobile terminals located in its own service area. Each of these location registration requests includes the terminal identification to identify the mobile terminal originating the request.

Each of the access points 120-0 through 120-N registers the terminal identification included in the received location registration request into the located terminal table of its own held and used for managing the mobile terminals located in the service area of its own, and sets up a time to delete this registered terminal identification.

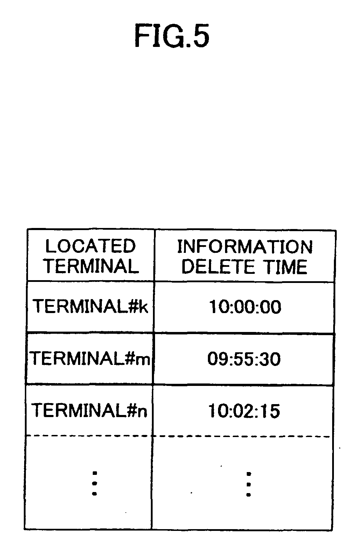

Fig.5 shows an example of the located terminal table according to the third embodiment of the present invention. As shown in Fig.5, the located terminal table associates the terminal identifications of the mobile terminals located in the service area provided by the access point (located terminals) with the times to delete the corresponding terminal identifications (information delete times). The information delete time may be, for example, a time determined by adding five minuets- to the time that the access point receives the location registration request from the corresponding mobile terminal.

When each of the access points 120-0 through 120-N registers the terminal identification into the located terminal table, and also sets up the delete time for the terminal identification, if thereafter the access point again receives the location registration request from the same mobile terminal of which terminal identification is already registered, then the access point updates the information delete time for that mobile terminal in its located terminal table. For example, each of the access points 120-0 through 120-N may update the information delete time into a time determined by adding five minuets to the time that the access point receives the location registration request again.

Also, each of the access points 120-0 through 120-N monitors those information delete times in the located terminal table of its own. If current time reaches the information delete time, the access point deletes the terminal identification corresponding to that information delete time.

It is considered as an example that the mobile terminal 300 moves from the service area provided by the access point 120-0 to the service area provided by the access point 120-1.

In this case, when the access point 120-0 receives the location registration request from the mobile terminal 300 located in the service area of its own provided by the access point, then the access point registers the terminal identification of the mobile terminal 300 into the located terminal table of its own and sets up the delete time for that terminal identification. Then, the access point 120-0 updates this information delete time in its located terminal table each time the access point receives the location registration request from the same mobile terminal 300. After the mobile terminal 300 subsequently moves out from the service area provided by the access point 120-0, the mobile terminal 300 no longer transmits the location registration request to the access point 120-0. Therefore, the access point 120-0 no longer updates the information delete time for the terminal identification of the mobile terminal 300 in the located terminal table of its own. The access point 120-0 thereafter deletes the terminal identification of the mobile terminal 300 in the located terminal table of its own when current time reaches the information delete time for that terminal identification.

Each of the access points 120-0 through 120-N in this embodiment operates in a similar manner to the one in the second embodiment when the access point receives the information packets from the router 110 via the transmission network 130.

That is, each of the access points 120-0 through 120-N determines whether the terminal identification in the received information packets is included in the located terminal table of its own, when the access point receives the information packets.

In the case that the terminal identification in the received information packets is included in the located terminal table of its own, each of the access points 120-0 through 120-N transmits those information packets to the service area of its own. While, in the case that the terminal identification in the received information packets is not included in the located terminal table of its own, each of the access points 120-0 through 120-N discards the information packets without transmitting.

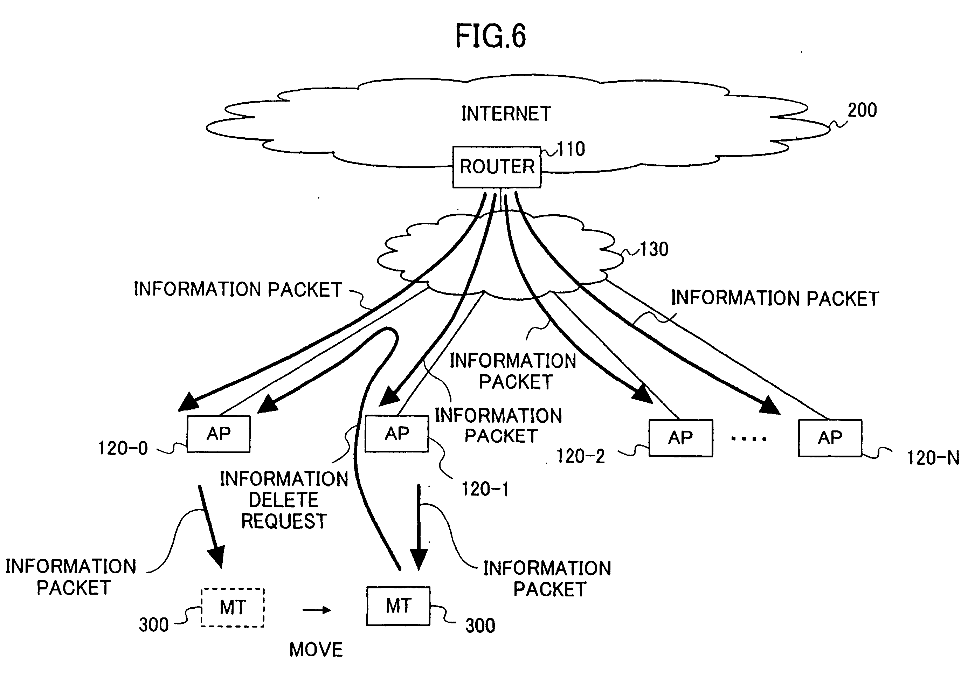

Fig.6 shows an example of the configuration of the mobile communication system according to the fourth embodiment of the present invention.

The mobile communication system shown in Fig.6 includes, as with the mobile communication system according to the first embodiment shown in Fig.1, the router 110, the plurality of access points 120-0 through 120-N, and the transmission network 130 connecting the router 110 and the access points 120-0 through 120-N.

The router 110 obtains the information packets from the Internet 200, and transfers those information packets via the transmission network 130 to all of the access points 120-0 through 120-N.

Each of the access points 120-0 through 120-N receives the location registration requests from the mobile terminals located in the service area of its own. Each of these location registration requests includes the terminal identification to identify the mobile terminal originating the request.

Upon receiving the location registration request, each of the access points 120-0 through 120-N registers the terminal identification in the received location registration request into the located terminal table of its own held and used for managing the mobile terminals located in the service area of its own.

Also, each of the access points 120-0 through 120-N receives information delete requests from the mobile terminals located in the service area of its own. When a mobile terminal moves out from a service area provided by a predetermined access point, the mobile terminal transmits a request (hereinafter referred to as information delete request) to delete the terminal identification of this mobile terminal from the located terminal table held by the predetermined access point. This information delete request includes the terminal identification of the mobile terminal originating the request, and identification information of the access point having the located terminal table including the terminal identification being requested to delete.

Upon receiving the information delete request, each of the access points 120-0 through 120-N analyzes the identification information of the access point included in the received information delete request, and then transfers this information delete request to the corresponding access point indicated by that identification information.

Upon receiving the information delete request, this corresponding access point analyzes the terminal identification included in the received information delete request, and then deletes the indicated terminal identification from the located terminal table of its own.

It is considered as an example that the mobile terminal 300 moves from the service area provided by the access point 120-0 into the service area provided by the access point 120-1.

In this case, the mobile terminal 300 transmits to the present access point 120-1 providing the service area in which the mobile terminal 300 is located after the movement the information delete request to delete its terminal identification from the located terminal table of the previous access point 120-0 providing the service area in which the mobile terminal 300 was located before the movement. Upon receiving the information delete request, the access point 120-1 analyzes the identification information of the access point included in the received information delete request, and then transfers this information delete request to the corresponding access point (that is the access point 120-0 in this case) indicated by that identification information.

Upon receiving this information delete request, the access point 120-0 analyzes the terminal identification included in the received information delete request, and then deletes the indicated terminal identification (that is the terminal identification of the mobile terminal 300 in this case) from the located terminal table of its own.

Each of the access points 120-0 through 120-N in this embodiment operates in a similar manner to the one in the second embodiment when the access point receives the information packets from the router 110 via the transmission network 130.

That is, each of the access points 120-0 through 120-N determines whether the terminal identification in the received information packets is included in the located terminal table of its own, when the access point receives the information packets.

In the case that the terminal identification in the received information packets is included in the located terminal table of its own, each of the access points 120-0 through 120-N transmits those information packets to the service area of its own. While, in the case that the terminal identification in the received information packets is not included in the located terminal table of its own, each of the access points 120-0 through 120-N discards those received information packets without transmitting.

As described above, in the present invention, the router transfers the information on the predetermined network to all of the communication apparatuses, and each of the communication apparatuses transmits this information on the predetermined network to the service area of its own provided by the communication apparatus. Therefore, the mobile terminal located in the service area provided by any of the communication apparatuses can receive the information from the predetermined network, thereby the reliability of providing information to the mobile terminals is improved.

The present invention is not limited to the specifically disclosed embodiments, and variations and modifications may be made without departing from the scope of the claims.

## Claims

1. A method for providing information in a mobile communication system comprising a router (110) connected to a predetermined network (130), and a plurality of communication apparatuses (120) which can communicate with mobile terminals (300) and are connected to the router, in order to provide the information on the predetermined network to the mobile terminals, **characterised in that**:
the router obtains the information from the predetermined network, and transfers this obtained information from the predetermined network to all of the communication apparatuses connected to the router;
each of the communication apparatuses receives the information from the predetermined network from the router, and transmits this received information from the predetermined network to a service area of its own provided by the communication apparatus;
upon receiving a location registration request from the mobile terminal located in the service area of its own, each of the communication apparatuses registers information relating to the mobile terminal originating the request into a located terminal table of its own held and used for managing the mobile terminals located in the service area of its own provided by the communication apparatus;
each of the communication apparatuses determines whether information relating to a destination mobile terminal of the received information from the predetermined network is included in the located terminal table of its own;
when the communication apparatus determines that the information relating to the destination mobile terminal is included in the located terminal table of its own, each of the communication apparatuses transmits the received information on the predetermined network to the destination mobile terminal; and
when the communication apparatus determines that the information relating to the destination mobile terminal is not included in the located terminal table of its own, each of the communication apparatuses does not transmit the received information on the predetermined network to the destination mobile terminal.

2. The method for providing information as claimed in claim 1, **characterised in that**:
each of the communication apparatuses sets up a delete time for the information relating to the mobile terminal registered in the located terminal table of its own;
each of the communication apparatuses updates the delete time each time the location registration request is received from the same mobile terminal after the information relating to that mobile terminal is registered in the located terminal table of its own; and
each of the communication apparatuses deletes the information relating to the mobile terminal corresponding to the delete time from the located terminal table of its own when current time reaches the delete time.

3. The method for providing information as claimed in claim 1, **characterised in that**:
when each of the communication apparatuses receives a request for deleting the information relating to the mobile terminal that has moved out from the service area of its own provided by the communication apparatus, each of the communication apparatuses deletes the information relating to the mobile terminal from the located terminal table of its own in response to the request.

4. A mobile communication system comprising a router (110) connected to a predetermined network (130), and a plurality of communication apparatuses (120) which can communicate with mobile terminals (300) and are connected to the router, the router **characterised by**:
an information obtaining part for obtaining information on the predetermined network; and
an information transfer part for transferring the information on the predetermined network obtained by the information obtaining part to all of the communication apparatuses, and each of the communication apparatuses comprising:
an information receiving part for receiving the information from the predetermined network from the router;
an information communicating part for transmitting the information on the predetermined network received from the information receiving part to a service area of its own provided by the communication apparatus;
an information registration part for registering the information relating to the mobile terminal originating the request into a located terminal table held and used for managing the mobile terminals located in the service area of its own provided by the communication apparatus, when the communication apparatus receives a location registration request from the mobile terminal located in the service area of its own; and
an information presence determining part for determining whether the information relating to a destination mobile terminal of the information on the predetermined network received by the information receiving part is included in the located terminal table, wherein:
when the information presence determining part determines that the information relating to the destination mobile terminal is included in the located terminal table, the information communicating part transmits the information from the predetermined network to the destination mobile terminal; and
when the information presence determining part determines that the information relating to the destination mobile terminal is not included in the located terminal table, the information communicating part does not transmit the information from the predetermined network to the destination mobile terminal.

5. The mobile communication systems as claimed in claim 4, each of the communication apparatuses further comprising:
a delete time setup part for setting up a delete time for the information relating to the mobile terminal registered in the located terminal table by the information registration part;
a delete time update part for updating the delete time each time the location registration is requested by the mobile terminal after the information relating to the mobile terminal is registered in the located terminal table by the information registration part; and
a first information delete part for deleting the information relating to the mobile terminal corresponding to the delete time from the located terminal table when current time reaches the delete time.

6. The mobile communication system as claimed in claim 4, each of the communication apparatuses further comprising a second information delete part, wherein:
when each of the communication apparatuses receives a request for deleting the information relating to the mobile terminal that has moved out from the service area of its own provided by the communication apparatus, the second information delete part deletes the information relating to the mobile terminal from the located terminal table in response to the request.

7. A communication apparatus (120) for transmitting information on a predetermined network (130) to a plurality of mobile terminals (300) in a mobile communication system, **characterised by** comprising;
an information receiving part for receiving the information on the predetermined network regardless of whether or not a destination mobile terminal of the received information is located in a service area of its own provided by the communication apparatus;
an information registration part for registering the information relating to a requesting mobile terminal into a located terminal table of its own held and used for managing the mobile terminals located in the service area of its own provided by the communication apparatus when the communication apparatus receives a location registration request from the mobile terminal located in the service area of its own;
an information presence determining part for determining whether the information relating to the destination mobile terminal of the information from the predetermined network received by the information receiving part is included in the located terminal table of its own;
and
an information communicating part for transmitting the information from the predetermined network to the destination mobile terminal, when the information presence determining part determines that the information relating to the destination mobile terminal is included in the located terminal table of its own, and for not transmitting the information from the predetermined network to the destination mobile terminal, when the information presence determining part determines that the information relating to the destination mobile terminal is not included in the located terminal table of its own.

8. The communication apparatus as claimed in claim 7, further comprising:
a delete time setup part for setting up a delete time for the information relating to the mobile terminal registered in the located terminal table of its own by the information registration part;
a delete time update part for updating the delete time each time the location registration is requested by the mobile terminal after the information relating to the mobile terminal is registered in the located terminal table of its own by the information registration part; and
a first information delete part for deleting the information relating to the mobile terminal corresponding to the delete time from the located terminal table of its own when current time reaches the delete time.

9. The communication apparatus as claimed in claim 8, further comprising a second information delete part, wherein:
when each of the communication apparatuses receives a request for deleting the information relating to the mobile terminal that has moved out from the service area of its own provided by the communication apparatus, the second information delete part deletes the information relating to the mobile terminal from the located terminal table of its own in response to the request.

## Patentansprüche

1. Ein Verfahren zum Bereitstellen von Information in einem Mobilkommunikationssystem, umfassend einen Router (110), der mit einem vorbestimmten Netzwerk (130) und einer Vielzahl von Kommunikationsvorrichtungen (120) verbunden ist, die mit Mobilendgeräten (300) kommunizieren können, und mit dem Router verbunden sind, um die Information auf dem vorbestimmten Netzwerk den Mobilendgeräten bereitzustellen,
**dadurch gekennzeichnet, dass**
der Router die Information von dem vorbestimmten Netzwerk erhält und diese erhaltene Information von dem vorbestimmten Netzwerk zu allen mit dem Router verbundenen Kommunikationsvorrichtungen transferiert;
jede der Kommunikationsvorrichtungen die Information von dem vorbestimmten Netzwerk von dem Router empfängt und diese empfangene Information von dem vorbestimmten Netzwerk an einen eigenen Servicebereich bereitgestellt durch die Kommunikationsvorrichtung überträgt;
beim Empfangen einer Ortsregistrierungsanforderung von dem Mobilendgerät, das sich in dem eigenen Servicebereich befindet, jede der Kommunikationsvorrichtungen eine Information bezüglich dem Mobilendgerät, von dem die Anforderung ausgeht, registriert in einer eigenen Lokalisiertes-Endgerät-Tabelle aufrechterhalten und verwendet zum Verwalten der Mobilendgeräte, die sich in dem eigenen, durch die Kommunikationsvorrichtung bereitgestellten, Servicebereich befinden;
jede der Kommunikationsvorrichtungen bestimmt, ob Information bezüglich einem Bestimmungsortmobilendgerät der empfangenen Information von dem vorbestimmten Netzwert in der eigenen Lokalisiertes-Endgerät-Tabelle enthalten ist;
wenn die Kommunikationsvorrichtung bestimmt, dass die Information bezüglich dem Bestimmungsortmobilendgerät in der eigenen Lokalisiertes-Endgerät-Tabelle enthalten ist, überträgt jede der Kommunikationsvorrichtungen die empfangene Information auf dem vorbestimmten Netzwerk an das Bestimmungsortmobilendgerät; und
wenn die Kommunikationsvorrichtung bestimmt, dass die Information bezüglich dem Bestimmungsortmobilendgerät nicht in der eigenen Lokalisiertes-Endgerät-Tabelle enthalten ist, überträgt jede der Kommunikationsvorrichtungen nicht die empfangene Information auf dem vorbestimmten Netzwerk an das Bestimmungsortmobilendgerät.

2. Das Verfahren zum Bereitstellen von Information nach Anspruch 1, **dadurch gekennzeichnet, dass**
jede der Kommunikationsvorrichtungen eine Löschzeit für die Information bezüglich dem Mobilendgerät einstellt, das in der eigenen Lokalisiertes-Endgerät-Tabelle registriert wird;
jede der Kommunikationsvorrichtungen die Löschzeit aktualisiert, jedes Mal, wenn die Ortsregistrierungsanforderung von dem gleichen Mobilendgerät empfangen wird, nachdem die Information bezüglich diesem Mobilendgerät in der eigenen Lokalisiertes-Endgerät-Tabelle registriert wird; und
jede der Kommunikationsvorrichtungen die Information bezüglich dem Mobilendgerät entsprechend der Löschzeit von der eigenen Lokalisiertes-Endgerät-Tabelle löscht, wenn die gegenwärtige Zeit die Löschzeit erreicht.

3. Das Verfahren zum Bereitstellen von Information nach Anspruch 1, **dadurch gekennzeichnet, dass**
wenn jede der Kommunikationsvorrichtungen eine Anforderung zum Löschen der Information bezüglich dem Mobilendgerät empfängt, das sich aus dem eigenen Servicebereich bereitgestellt von der Kommunikationsvorrichtung bewegt hat, jede der Kommunikationsvorrichtungen die Information bezüglich dem Mobilendgerät von der eigenen Lokalisiertes-Endgerät-Tabelle in Ansprechen auf die Anforderungen löscht.

4. Ein Mobilkommunikationssystem, umfassend einen Router (110) verbunden mit einem vorbestimmten Netzwerk (130) und einer Vielzahl von Kommunikationsvorrichtungen (120), die mit Mobilendgeräten (300) kommunizieren können, und mit dem Router verbunden sind, wobei der Router **gekennzeichnet ist durch**:
einen Informationserhalteteil zum Erhalten von Information auf dem vorbestimmten Netzwerk;
und
einen Informationstransferierteil zum Transferieren der Information auf dem vorbestimmten Netzwerk, erhalten **durch** das Informationserhalteteil, an alle der Kommunikationsvorrichtungen, wobei jede der Kommunikationsvorrichtungen umfasst:
einen Informationsempfangsteil zum Empfangen der Information von dem vorbestimmten Netzwerk von dem Router;
einen Informationskommunikationsteil zum Übertragen der Information auf dem vorbestimmten Netzwerk, die von dem Informationsempfangsteil empfangen wird, an einen eigenen Servicebereich, bereitgestellt von der Kommunikationsvorrichtung;
einen Informationsregistrierungsteil zum Registrieren der Information bezüglich dem Mobilendgerät, von dem die Anforderung ausgeht, in eine Lokalisiertes-Endgerät-Tabelle, aufrechterhalten und verwendet zum Verwalten der Mobilendgeräte, die sich in dem eigenen Servicebereich, bereitgestellt von der Kommunikationsvorrichtung, befinden, wenn die Kommunikationsvorrichtung eine Ortsregistrierungsanforderung von dem Mobilendgerät empfängt, das sich in dem eigenen Servicebereich befindet; und
einen Informationsanwesenheitsbestimmungsteil zum Bestimmen, ob die Information bezüglich einem Bestimmungsortmobilendgerät der Information auf dem vorbestimmten Netzwerk, empfangen von dem Informationsempfangsteil, in der Lokalisiertes-Endgerät-Tabelle enthalten ist, wobei:
wenn der Informationsanwesenheitsbestimmungsteil bestimmt, dass die Information bezüglich dem Bestimmungsortmobilendgerät in der Lokalisiertes-Endgerät-Tabelle enthalten ist, der Informationskommunikationsteil die Information von dem vorbestimmten Netzwerk an das Bestimmungsortmobilendgerät überträgt; und
wenn der Informationsanwesenheitsbestimmungsteil bestimmt, dass die Information bezüglich dem Bestimmungsortmobilendgerät nicht in der Lokalisiertes-Endgerät-Tabelle enthalten ist, der Informationskommunikationsteil die Information von dem vorbestimmten Netzwerk nicht an das Bestimmungsortmobilendgerät überträgt.

5. Das Mobilkommunikationssystem nach Anspruch 4, wobei jede der Kommunikationsvorrichtungen ferner umfasst:
einen Löschzeiteinstellteil zum Einstellen einer Löschzeit für die Information bezüglich dem Mobilendgerät, das in der Lokalisiertes-Endgerät-Tabelle von dem Informationsregistrierungsteil registriert ist;
einen Löschzeitaktualisierteil zum Aktualisieren der Löschzeit, jedes Mal, wenn die Ortsregistrierung von dem Mobilendgerät angefordert wird, nachdem die Information bezüglich dem Mobilendgerät in der Lokalisiertes-Endgerät-Tabelle von dem Informationsregistrierungsteil registriert wird; und
einen ersten Informationslöschteil zum Löschen der Information bezüglich dem Mobilendgerät entsprechend der Löschzeit von der Lokalisiertes-Endgerät-Tabelle, wenn die gegenwärtige Zeit die Löschzeit erreicht.

6. Das Mobilkommunikationssystem nach Anspruch 4, wobei jede der Kommunikationsvorrichtungen ferner einen zweiten Informationslöschteil umfasst, wobei:
wenn jede der Kommunikationsvorrichtungen eine Anforderung zum Löschen der Information bezüglich dem Mobilendgerät empfängt, das sich aus dem eigenen Servicebereich, bereitgestellt von der Kommunikationsvorrichtung, bewegt hat, der zweite Informationslöschteil die Information bezüglich dem Mobilendgerät von der Lokalisiertes-Endgerät-Tabelle in Ansprechen auf die Anforderung löscht.

7. Eine Kommunikationsvorrichtung (120) zum Übertragen von Information auf einem vorbestimmten Netzwerk (130) an eine Vielzahl von Mobilendgeräten (300) in einem Mobilkommunikationssystem,
**gekennzeichnet durch**,
einen Informationsempfangsteil zum Empfangen der Information auf dem vorbestimmten Netzwerk ungeachtet dessen, ob ein Bestimmungsortmobilendgerät der empfangenen Information sich in einem eigenen Servicebereich, bereitgestellt von einer Kommunikationsvorrichtung, befindet;
einen Informationsregistrierungsteil zum Registrieren der Information bezüglich einem anfordernden Mobilendgerät in eine eigene Lokalisiertes-Endgerät-Tabelle, aufrechterhalten und verwendet zum Verwalten der Mobilendgeräte, die sich in dem eigenen Servicebereich, bereitgestellt von der Kommunikationsvorrichtung, befinden, wenn die Kommunikationsvorrichtung eine Lokalisierungsregistrierungsanforderung von dem in dem eigenen Servicebereich befindlichen Mobilendgerät empfängt;
einen Informationsanwesenheitsbestimmungsteil zum Bestimmen, ob die Information bezüglich dem Bestimmungsortmobilendgerät der Information von dem vorbestimmten Netzwerk, empfangen von dem Informationsempfangsteil, in der eigenen Lokalisiertes-Endgerät-Tabelle enthalten ist; und
einen Informationskommunikationsteil zum Übertragen der Information von dem vorbestimmten Netzwerk an das Bestimmungsortmobilendgerät, wenn der Informationsanwesenheitsbestimmungsteil bestimmt, dass die Information bezüglich dem Bestimmungsortmobilendgerät in der eigenen Lokalisiertes-Endgerät-Tabelle enthalten ist, und zum Nicht-Übertragen der Information von dem vorbestimmten Netzwerk an das Bestimmungsortsmobilendgerät, wenn der Informationsanwesenheitsbestimmungsteil bestimmt, dass die Information bezüglich dem Bestimmungsortmobilendgerät nicht in der eigenen Lokalisiertes-Endgerät-Tabelle enthalten ist.

8. Die Kommunikationsvorrichtung nach Anspruch 7, ferner umfassend:
einen Löschzeiteinstellteil zum Einstellen einer Löschzeit für die Information bezüglich dem Mobilendgerät, das in der eigenen Lokalisiertes-Endgerät-Tabelle von dem Informationsregistrierungsteil registriert ist;
einen Löschzeitaktualisierteil zum Aktualisieren der Löschzeit jedes Mal, wenn die Ortsregistrierung von dem Mobilendgerät angefordert wird, nachdem die Information bezüglich dem Mobilendgerät in der eigenen Lokalisiertes-Endgerät-Tabelle von dem Informationsregistrierungsteil registriert ist; und
einen ersten Informationslöschteil zum Löschen der Information bezüglich dem Mobilendgerät entsprechend der Löschzeit von der eigenen Lokalisiertes-Endgerät-Tabelle, wenn die gegenwärtige Zeit die Löschzeit erreicht.

9. Die Kommunikationsvorrichtung nach Anspruch 8, ferner umfassend einen zweiten Informationslöschteil, wobei
wenn jede der Kommunikationsvorrichtungen eine Anforderung zum Löschen der Information bezüglich dem Mobilendgerät empfängt, das sich aus dem eigenen Servicebereich, bereitgestellt von der Kommunikationsvorrichtung, bewegt hat, der zweite Informationslöschteil die Information bezüglich dem Mobilendgerät von der eigenen Lokalisiertes-Endgerät-Tabelle in Ansprechen auf die Anforderungen löscht.

## Revendications

1. Procédé pour fournir une information dans un système de communication mobile comprenant un routeur (110) connecté à un réseau prédéterminé (130), et une pluralité d'appareils de communication (120) qui peuvent communiquer avec des terminaux mobiles (300) et sont connectés au routeur, afin de fournir l'information sur le réseau prédéterminé aux terminaux mobiles, **caractérisé en ce que** :
le routeur obtient l'information à partir du réseau prédéterminé, et transfère cette information obtenue à partir du réseau prédéterminé à tous les appareils de communication connectés au routeur ;
chacun des appareils de communication reçoit l'information à partir du réseau prédéterminé du routeur, et transmet cette information reçue à partir du réseau prédéterminé à une zone de service qui lui est propre desservie par l'appareil de communication ;
à la réception d'une demande d'enregistrement de localisation provenant du terminal mobile localisé dans la zone de service qui lui est propre, chacun des appareils de communication enregistre l'information concernant le terminal mobile émettant la demande dans une table de terminaux localisés qui lui est propre maintenue et utilisée pour gérer les terminaux mobiles localisés dans la zone de service qui lui est propre desservie par l'appareil de communication ;
chacun des appareils de communication détermine si l'information concernant un terminal mobile de destination de l'information reçue du réseau prédéterminé est incluse dans la table de terminaux localisés qui lui est propre ;
lorsque l'appareil de communication détermine que l'information concernant le terminal mobile de destination est incluse dans la table de terminaux localisés qui lui est propre, chacun des appareils de communication transmet l'information reçue sur le réseau prédéterminé au terminal mobile de destination ; et
lorsque l'appareil de communication détermine que l'information concernant le terminal mobile de destination n'est pas incluse dans la table de terminaux localisés qui lui est propre, chacun des appareils de communication ne transmet pas l'information reçue sur le réseau prédéterminé au terminal mobile de destination.

2. Procédé pour fournir une information selon la revendication 1, **caractérisé en ce que** :
chacun des appareils de communication établit un temps de suppression pour l'information concernant le terminal mobile enregistré dans la table de terminaux localisés qui lui est propre ;
chacun des appareils de communication met à jour le temps de suppression chaque fois que la demande d'enregistrement de localisation est reçue du même terminal mobile après que l'information concernant ce terminal mobile est enregistrée dans la table de terminaux localisés qui lui est propre ; et
chacun des appareils de communication supprime l'information concernant le terminal mobile correspondant au temps de suppression de la table de terminaux localisés qui lui est propre lorsque le temps actuel atteint le temps de suppression.

3. Procédé pour fournir une information selon la revendication 1, **caractérisé en ce que** :
chacun des appareils de communication reçoit une demande pour supprimer l'information concernant le terminal mobile qui est sorti de la zone de service qui lui est propre desservie par l'appareil de communication, chacun des appareils de communication supprime l'information concernant le terminal mobile de la table de terminaux localisés qui lui est propre en réponse à la demande.

4. Système de communication mobile comprenant un routeur (110) connecté à un réseau prédéterminé (130), et une pluralité d'appareils de communication (120) qui peuvent communiquer avec des terminaux mobiles (300) et sont connectés au routeur, le routeur étant **caractérisé par** :
une partie obtention d'information pour obtenir une information sur le réseau prédéterminé ;
et
une partie transfert d'information pour transférer l'information sur le réseau prédéterminé obtenue par la partie obtention d'information à tous les appareils de communication, et chacun des appareils de communication comprenant :
une partie réception d'information pour recevoir l'information à partir du réseau prédéterminé du routeur ;
une partie communication d'information pour transmettre l'information sur le réseau prédéterminé reçue de la partie réception d'information à une zone de service qui lui est propre desservie par l'appareil de communication ;
une partie enregistrement d'information pour enregistrer l'information concernant le terminal mobile émettant la demande dans une table de terminaux localisés maintenue et utilisée pour gérer les terminaux mobiles localisés dans la zone de service qui lui est propre desservie par l'appareil de communication, lorsque l'appareil de communication reçoit une demande d'enregistrement de localisation provenant du terminal mobile localisé dans la zone de service qui lui est propre ; et
une partie détermination de la présence d'information pour déterminer si l'information concernant un terminal mobile de destination de l'information sur le réseau prédéterminé reçue par la partie réception d'information est incluse dans la table de terminaux localisés, dans laquelle :
lorsque la partie détermination de la présence d'information détermine que l'information concernant le terminal mobile de destination est incluse dans la table de terminaux localisés, la partie communication d'information transmet l'information provenant du réseau prédéterminé au terminal mobile de destination ; et
lorsque la partie détermination de la présence d'information détermine que l'information concernant le terminal mobile de destination n'est pas incluse dans la table de terminaux localisés, la partie communication d'information ne transmet pas l'information provenant du réseau prédéterminé au terminal mobile de destination.

5. Système de communication mobile selon la revendication 4, chacun des appareils de communication comprenant en outre :
une partie établissement du temps de suppression pour établir un temps de suppression pour l'information concernant le terminal mobile enregistré dans la table de terminaux localisés par la partie enregistrement d'information ;
une partie mise à jour du temps de suppression pour mettre à jour le temps de suppression chaque fois que l'enregistrement de localisation est demandé par le terminal mobile après que l'information concernant le terminal mobile est enregistrée dans la table de terminaux localisés par la partie enregistrement d'information ; et
une première partie suppression d'information pour supprimer l'information concernant le terminal mobile correspondant au temps de suppression de la table de terminaux localisés lorsque le temps actuel atteint le temps de suppression.

6. Système de communication mobile selon la revendication 4, chacun des appareils de communication comprenant en outre une seconde partie suppression d'information, dans laquelle :
lorsque chacun des appareils de communication reçoit une demande pour supprimer l'information concernant le terminal mobile qui est sorti de la zone de service qui lui est propre desservie par l'appareil de communication, la seconde partie suppression d'information supprime l'information concernant le terminal mobile de la table de terminaux localisés qui lui est propre en réponse à la demande.

7. Appareil de communication (120) pour transmettre une information sur un réseau prédéterminé (130) à une pluralité de terminaux mobiles (300) dans un système de communication mobile, **caractérisé en ce qu'**il comprend :
une partie réception d'information pour recevoir l'information sur le réseau prédéterminé indépendamment de si un terminal mobile de destination de l'information reçue est localisé ou non dans une zone de service qui lui est propre desservie par l'appareil de communication ;
une partie enregistrement d'information pour enregistrer l'information concernant un terminal mobile demandeur dans une table de terminaux localisés qui lui est propre maintenue et utilisée pour gérer les terminaux mobiles localisés dans la zone de service qui lui est propre desservie par l'appareil de communication lorsque l'appareil de communication reçoit une demande d'enregistrement de localisation provenant du terminal mobile localisé dans la zone de service qui lui est propre ;
une partie détermination de la présence d'information pour déterminer si l'information concernant le terminal mobile de destination de l'information provenant du réseau prédéterminé reçue par la partie réception d'information est incluse dans la table de terminaux localisés qui lui est propre ;
et
une partie communication d'information pour transmettre l'information provenant du réseau prédéterminé au terminal mobile de destination, lorsque la partie détermination de la présence d'information détermine que l'information concernant le terminal mobile de destination est incluse dans la table de terminaux localisés qui lui est propre, et pour ne pas transmettre l'information provenant du réseau prédéterminé au terminal mobile de destination, lorsque la partie détermination de la présence d'information détermine que l'information concernant le terminal mobile de destination n'est pas incluse dans la table de terminaux localisés qui lui est propre.

8. Appareil de communication selon la revendication 7, comprenant en outre :
une partie établissement du temps de suppression pour établir un temps de suppression pour l'information concernant le terminal mobile enregistré dans la table de terminaux localisés qui lui est propre par la partie enregistrement d'information ;
une partie mise à jour du temps de suppression pour mettre à jour le temps de suppression chaque fois que l'enregistrement de localisation est demandé par le terminal mobile après que l'information concernant le terminal mobile est enregistrée dans la table de terminaux localisés qui lui est propre par la partie enregistrement d'information ; et
une première partie suppression d'information pour supprimer l'information concernant le terminal mobile correspondant au temps de suppression de la table de terminaux localisés qui lui est propre lorsque le temps actuel atteint le temps de suppression.

9. Appareil de communication selon la revendication 8, comprenant en outre une seconde partie suppression d'information, dans laquelle :
lorsque chacun des appareils de communication reçoit une demande pour supprimer l'information concernant le terminal mobile qui est sorti de la zone de service qui lui est propre desservie par l'appareil de communication, la seconde partie suppression d'information supprime l'information concernant le terminal mobile de la table de terminaux localisés qui lui est propre en réponse à 1a demande.
